# EUROPEAN PATENT SPECIFICATION

(11) **EP 2 397 365 B1**
(45) Date of publication and mention of the grant of the patent: **23.01.2013**
(21) Application number: 10166603.0
(22) Date of filing: 21.06.2010
(51) Int. Cl.: B60P 7/15

(54) **Arrangement for supporting load in transportation unit**
Anordnung zum Tragen der Last in einer Transporteinheit
Agencement pour supporter le chargement dans une unité de transport

(43) Date of publication of application: 21.12.2011
(73) Proprietor: OY Langh Ship AB, 21500 Piikkiö (FI)
(72) Inventor: Langh, Hans, 21500, Piikkiö (FI)
(74) Representative: Roitto, Klaus

(56) References cited:
- EP-A2- 1 661 758
- DE-A1- 19 930 763
- US-A1- 2003 161 700
- US-A1- 2006 051 178
- US-A1- 2007 110 539

## Description

### Background of the invention

The invention relates to a support arrangement for supporting load in a transportation unit, such as container or vehicle for transporting load, the support arrangement comprising a rod-like support member and a first and a second rail parallel to the longitudinal axis of the transportation unit, which rails comprise a wall structure for receiving the support member at a given support point beside the load to support it, the rod-like support member comprising a first support end for positioning to a first support point in the first rail and a second support end opposite to the first support end for positioning to a second support point in the second rail so that the rod-like support member is at right angles to the longitudinal axis of the transportation unit, wherein the rod-like support member is arranged to be displaceable along the rails guided by the rails.

This type of support arrangement is known from publication US 2006/0051178 A1. The rod-like support members of this known support arrangement are in the form of telescopic retaining bars. In order to position the retaining bars against the load to be supported, the retaining bars are displaceable along rails arranged at opposite sides of the transportation unit and they extend parallel to the longitudinal axis of the transportation unit. End clamps are provided at opposite ends of the retaining bars for clamping the opposite ends of the retaining bars on to exposed upper edges of rails.

US 2003/0161700 A1 discloses an arrangement for supporting load in cargo equipment while in transit. The arrangement comprises bracing beams and flexible straps to support the load. The flexible straps are displaceable along the bracing beams against the cargo and can be locked close to the cargo to prevent side-to-side shifting of the cargo during transport. The straps are locked close to the cargo utilizing square shaped clamps which are tightened around the bracing beams.

From publication DE 3331348 A1 is known a support arrangement having rails with a wall structure provided with several openings in order to receive a rod-like support member and lock it into given spots of the rails. A problem with the support arrangement is that it cannot support and tighten the load to be supported in such a way to avoid harmful displacements of the load to be supported, if the transportation unit moves back and forth during transportation. Harmful displacements include here typically such displacements or movements which cause the load to overturn and which bring about large impact loads on the rod-like support member. The support arrangement does not enable to position and lock the rod-like support member against the load, on both sides of the load in such a way that the load would be supported substantially without clearance by both support member simultaneously. Even a small gap or clearance between the support members and the load causes great loads on both the support members and the load if the load moves back and forth for instance during sea transport in rough seas. Such a gap will inevitably always develop in this known support arrangement if the load comprises a casing which will be pressed and shrink somewhat owing to external forces.

The transportation and supporting of a high, narrow and heavy load with known support arrangements has proven to be especially problematic. Examples of such a load are heavy and narrow metal reels having a large diameter. Their transport and supporting has proven difficult especially in lorries, but also in trains, ships and airplanes, in which the reels are typically transported in containers.

### Brief description of the invention

It is an object of the invention to provide a new support arrangement that eliminates the above-mentioned prior-art problems and permits safe support for high and narrow loads when the loads are transported in different transportation units, such as different vehicles and transportation means.

To implement this, the support arrangement according to the invention is characterised in that
- the wall structure of the rails forms for said receiving of the rod-like support member longitudinal grooves and said support points arranged in the longitudinal direction of the rails,
- the rod-like support member is arranged to be displaceable along the rails guided by longitudinal inner walls of the grooves of the rails, and
- the support arrangement comprises an elongated flexible member and a tightening means for tightening the elongated flexible member against the load to be supported so that displacement of the load in relation to the rod-like member is prevented.

According to a preferable embodiment of the invention
- the first support end of the rod-like support member is adapted to be fastened to the first support point in the first rail, and the second support end of the rod-like support member is adapted to be fastened to the second support point in the second rail for positioning the rod-like support member in a locked position in which its free movement in the longitudinal direction of the transportation unit is prevented,
- inner walls of the longitudinal grooves of the rails form said support points when the rod-like support member is in its locked position,
- the first support end and the second support end of the rod-like support member each comprising two gripping edges arranged diametrically to each other, which are arranged to bite into the inner walls of the longitudinal grooves of the rails when the rod-like support member is in its locked position, the inner walls forming for the support ends said support points and
- the elongated flexible support member is arranged to turn the rod-like support member and its support ends so that the gripping edges of the rod-like support member wedge by biting into the inner walls of the grooves of the rails to bring the rod-like support member into its locked position the rod-like support member comprising power transmission brackets in cooperation with the elongated flexible member, which are arranged to transmit a torque to the rod-like support member for turning it, when the elongated flexible member is tightened with tightening means connected thereto and arranged to uphold a torque exerted on the rod-like support member and keep the rod-like support member in its locked position so that its free movement relative to the transportation unit is prevented. Such an embodiment keeps the load in place in the transportation unit and prevents the load from being displaced relative to the longitudinal axis of the transportation unit.

Preferred embodiments of the support arrangement of the invention are disclosed in attached claims 2 to 14.

A great advantage of the support arrangement of the invention is that it makes it possible to securely support different loads, even a high and narrow load, in different types of transportation units so that the load cannot during transportation move in the transportation unit. When the elongated flexible member is also arranged around the load to be supported, the load to be supported can be pressed between the support member and elongated flexible member when the elongated flexible member is tightened with the tightening means If, in the embodiment of the invention comprising a rod-like support member whose support ends comprise diametrical gripping edges, the load strives at moving during transportation, the load causes to the elongated flexible member of the support arrangement a force that endeavours to turn the rod-like support member and makes the gripping edges of the rod-like support member to lock even tighter to the support points in the transportation unit, that is, to the longitudinal inner walls of the grooves of the rails, which inner walls receive the gripping edges. Thus, the support arrangement is self-tightening, which is a great advantage when compared to known support arrangements. The support arrangement also provides the advantage that it is easy and quick to arrange around the load to be transported to support it. Thanks to being self-tightening the gripping edges are caused to grip even to smooth inner walls. Because the elongated flexible member and the tightening means flex elastically, the gripping force of the gripping edges to the inner walls prevails even if slight changes occurred in the outer dimensions of the supported load during transportation. The outer dimensions of the load may slightly change due to the fact, for example, that the packaging material of the load compresses slightly when stresses are directed to it during transportation. Thus, the elongated flexible member and the tightening means attached thereto ensure that the support rod and load to be supported remain stationary in all situations. Because the support provided by the support arrangement is extremely secure, the load may be heavy; an example of which is large-diameter narrow metal reels.

### Brief description of figures

In the following, the invention will be described in greater detail by means of an example and by referring to the attached drawing, in which
Figure 1 is a top view of an arrangement of the invention for supporting reels in a transportation unit,
Figure 2 shows a section along line II-II of Figure 1,
Figures 3 and 4 are end and side views, respectively, of a support rod used in the support arrangement of Figures 1 and 2,
Figure 5 is an end view of an alternative support rod embodiment to that of Figure 4,
Figure 6 illustrates a rail and groove for receiving a support rod, which belong to the support arrangement of Figures 1 and 2,
Figures 7 and 8 illustrate the construction of the inner walls of the rail in Figure 6,
Figure 9 illustrates how the support rod of Figures 3 to 5 locks into the transportation unit,
Figures 10 and 11 show in more detail than Figures 1 and 2 how a reel is supported in a transportation unit of Figures 1 and 2, as seen from the end and side, respectively,
Figure 12 is an alternative embodiment to that of Figure 1 for supporting a reel in a transportation unit,
Figures 13 and 14 show in more detail than Figure 12 how a reel is supported in a transportation unit of Figure 12, as seen from the end and side, respectively,
Figures 15 and 16 illustrate how a reel is supported in the cargo space of a lorry by using the support arrangement of the invention, as seen from the end and side, respectively,
Figure 17 is a side view of a support rod used in the support arrangement of Figures 15 and 16, and
Figure 18 illustrates a rail and groove for receiving a support rod, which belong to the support arrangement of Figures 15 and 16,
Figure 19 illustrates the construction of the rail in Figure 18, and
Figures 20 and 21 illustrate an alternative embodiment of the support rod of the support arrangement a seen from the side and end, respectively.

### Detailed description of the invention

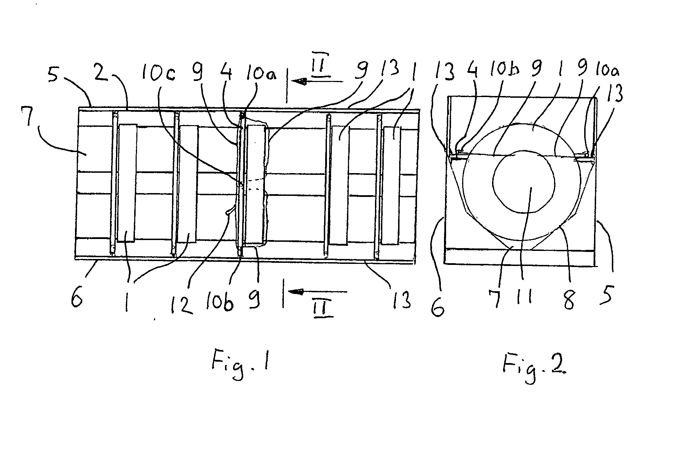

Figure 1 is a top view of a container 2, in which five metal reels 1 have been loaded. The container 2 is not loaded full of reels, because its strength would not be sufficient to carry a large number of reels. The diameter of the reels 1 is approximately 190 cm and their width is approximately 30 cm. As shown in the figure, the reels are arranged at a distance from each other, whereby they load the container evenly.

Figure 2 shows a section along line II-II of Figure 1. Figures 1 and 2 show that the reels 1 are arranged in a chute 7 that extends from one end of the container to the other. The chute 7 comprises oblique support surfaces 8, to which the mantle surface of the reel 1 is supported.

Each reel 1 is supported with a support arrangement that comprises a support rod 4 and rope 9. The support rod 4 supports the reel 1 on one side and the rope 9 is wound around the reel 1 such that it supports the reel on the opposite side. The rope 9 is fastened to a first bracket 10a on one end of the support rod 4, then guided on the outside behind the reel 1 and through the hole 11 in the reel to a bracket 10b in the middle of the support rod, then back behind the reel and through the hole 11 of the reel back to a bracket 10c on the other, opposite end of the support rod, and the rope 9 ends in the bracket 10a. A tightening means, for instance rigging screw 12, is arranged to the rope 9 to tighten the rope 9. The purpose of the tightening is to lock the support rod into rails 13 on walls 5, 6 of the transportation unit. Because the brackets 10a, 10b, 10c act as lever arms to turn the support rod 4, the brackets 10a, 10b, 10c may be called power transmission brackets or moment transmission brackets.

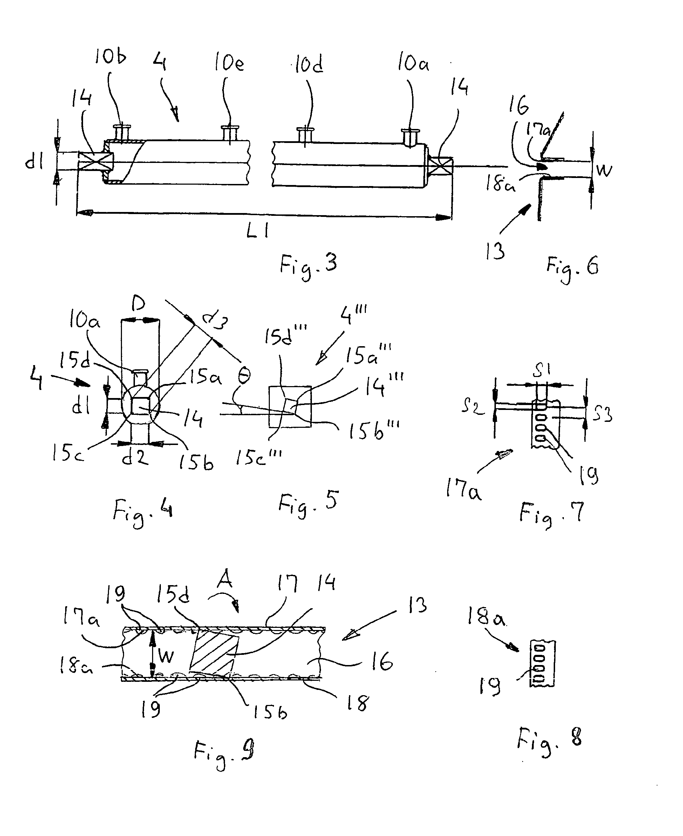

Figures 3 and 4 show the support rod 4 in more detail. The number of brackets 10a, 10c, 10d, 10e in the support rod may vary. When there are several brackets, the rope may be fastened/guided to more than one point of the support rod 4, which increases the suitability of the support rod in supporting loads of different type and also makes it possible to support the load in a direction that is perpendicular to the direction of movement of the transportation unit, that is, perpendicular to the longitudinal direction of the transportation unit. The total length L1 of the support rod 4 is selected such that it extends between the opposite walls 5, 6 of the transportation unit. The length L1 is approximately 2300 mm when the transportation unit 2 is a container. At the opposite ends of the support rod 4, there are support ends 14 that are rectangular in cross-section, as shown in Figure 4.

Figures 1 to 8 show that the diametrically opposite corners of the support end 14 form gripping edges 15a, 15b, 15c and 15d that lock into the rails 13 on the walls 5, 6 of the container. The gripping edges lock by wedging to the rails 13, as illustrated in particular in Figure 9 showing that the gripping edges 15b and 15d of the support end 14 are locked onto the smooth inner walls 17a, 18a of the top 17 and bottom walls 18 of the rail 13. The more the rope (see rope 9 of Figures 1 and 2) is tightened, the more the support rod 4 turns in the turning direction of arrow A in Figure 9, and the more the gripping edges 15b and 15d bite into the inner wall 17a, 18a of the walls (wall construction) 17, 18 and prevent the movement of the support rod in the longitudinal direction of the rail 13. In a way, the gripping edges 15b, 15d cut into the inner walls 17a, 18a and lock the support rod 4 in place so that it is in its locked position. When the tightening rope (rope 9 in Figures 1 and 2) is also wound around the load to be supported (that is, reels 1, 1', 1" in Figures 1, 2, 10 to 16), the load is pressed between the support rod and tightening rope. In addition, thanks to the yield of the tightening rope (the rope yields in practice and is not completely rigid), the biting force of the gripping edges 15b, 15d into the inner walls 17a, 18a prevails even if slight changes occurred in the outer dimensions of the supported load (that is, reels 1, 1', 1" in Figures 1, 2, 10 to 16) during transportation. The outer dimensions of the load may slightly change due to the fact, for example, that the packaging material of the load compresses slightly at some points when repeated stresses are directed to it during transportation. Thus, the tightening rope ensures that the support rod 4 and load to be supported remain stationary in all situations.

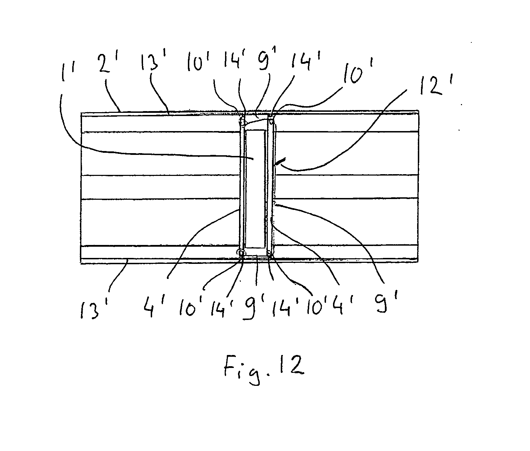

Figure 7 shows the inner wall 17a of an upper part of the rail 13. One can see that the inner wall 17a comprises consecutive teeth 19. The dimensions of the teeth are S1 = 20 mm, S2 = 10 mm, and the internal distance between the teeth is S3 = 20 mm. Such a density of the teeth enables that the support rod in practice can be positioned close enough to the load to be supported, also if support rods are positioned on both sides of the load (c.f. Figure 12). The tooth system is strived to be as dense as possible, whereby the support rod 4 can be positioned as close as possible to the load 1 to be supported,

Figure 8 shows the inner wall 18a of an lower part of the rail 13. The inner wall 18a comprises similar consecutive teeth 19 as are found in the inner wall 17a of the upper part of the rail, c.f. Figure 7. When the reel 1 is fastened with only one support rod 4, as shown in Figs 1 and 2, a tooth system (teeth 19) is provided both in the inner wall 17a of the upper part of the rail and in the wall 18a of the lower part of the rail.

Owing to the fact that the tightening rope is tightened also if the load to be supported strives to displace during transportation, the support arrangement is self tightening. Thanks to being self tightening, one could think to design smooth inner walls 17a and 18a, i.e. inner walls 17a, 18a without teeth or other protrusions or dents. Smooth inner walls would enable to position without any clearance the support rod against the load to be supported.

The rail 13 is made of a steel sheet that is edged. The hardness and strength of the steel sheet are smaller than the hardness and strength of the gripping edges 15a, 15b, 15c and 15d of the gripping end 14. The thickness of the steel sheet is 4 mm, for instance, and its yield strength is 355 MPa. The gripping end 14 of the support rod 4 is preferably made of steel. The yield strength of the gripping edges 15a, 15b, 15c, 15d of the support end is in the range of 1000 MPa. When the hardness and strength of the gripping edges 15a, 15b, 15c, 15d are greater than the hardness and strength of the rail, the gripping edges bite and cut well into the smooth walls 17a, 18a of the rail. It is thinkable that the rails are made of aluminium, because it is light and relatively soft. Other metals may also be considered as the manufacturing material of the rail 13.

The diameter d1 of the support end 14 of the support rod 4 is slightly smaller that the width W of the rail groove 16, whereby the gripping end 14 of the support rod 4 may freely move in the groove 16 of the rail 13 in the longitudinal direction. For example, d1 = 30 mm and W = 35 mm. The diameter d2 of the support end 14 is 35 mm, for instance. The largest diameter d3 of the support end 14 is larger than the width W of the rail groove 16, whereby the gripping edges 15b, 15d of the support end 14 may grip and bite into the inner walls 17a, 18a of the rail 13. When the support rod 4 is turned, see Figure 9. The length of the support end 14 is 50 mm. The diameter D of the support rod 4 is approximately 70 mm.

Figure 5 shows an alternative to the round shape of the support rod 4"'. The support rod 4"' of Figure 5 is rectangular in shape. The support rod 4"' of Figure 5 provides the advantage over the support rod of Figure 4 that its strength and rigidity can be made great relative to its weight, whereby it is lighter than a round support rod and thus easier to handle when mounted in place or detached. Figure 5 shows that the plane of the support end 14"' is preferably at a small angle ○ to the plane of the support rod 4"'. The angle ⊖ is preferably 2 to 10 degrees. Thanks to the angle ⊖, the plane of the support rod 4"' settles perpendicular to the load to be supported when the support end 14"' is in its locked position and slightly obliquely (see Figure 9) in the groove 16 of the rail 13.

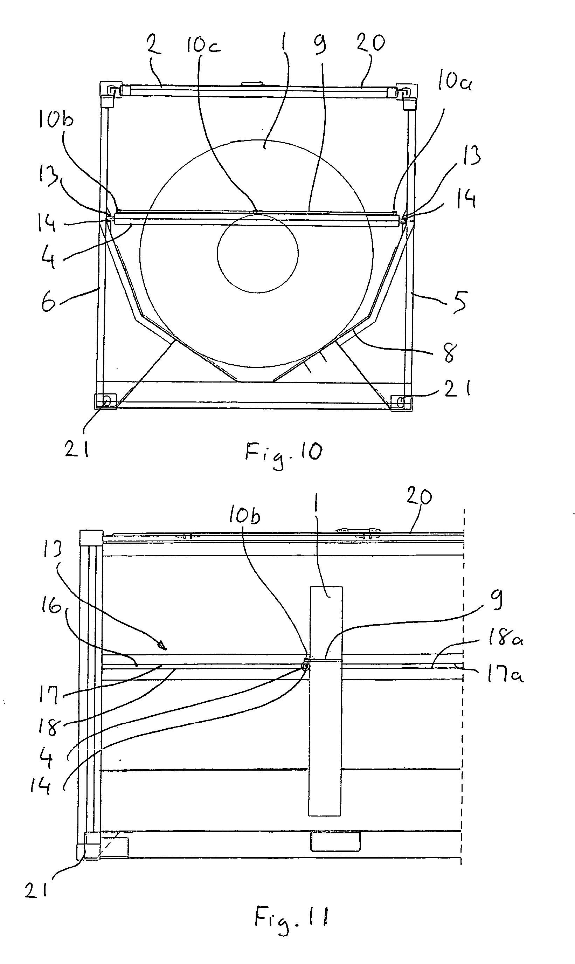

Figures 10 and 11 show the solution of the invention in more detail than in Figure 2. Figures 10 and 11 use the same reference numbers as Figure 2. Figure 10 shows that the transportation unit is a container that comprises an opening roof 20. The fastening points of the container to the base (not shown) are indicated by reference number 21. The figure also shows that the support ends 14 of the support rod 4 are arranged in the groove 16 in the rail.

Figures 12 to 14 show an alternative support arrangement for supporting a reel 1 to that shown in Figures 1, 10 and 11. The arrangement of Figures 12 to 14 differs from that shown in Figures 1, 10 and 11 in that on both sides of the reel 1, support rods 4' are arranged and the rope 9' is guided in a different manner than in Figures 1, 10 and 11. The rope 9' is guided to brackets 10' at the ends of the support rods 4', thus connecting them operationally to each other. When the rope 9' is tightened with tightening means 12', the support rods 4' turn in such a manner that the gripping edges of their support ends lock into the inner walls 17a', 18a' of the groove 16' of the rail 13'.

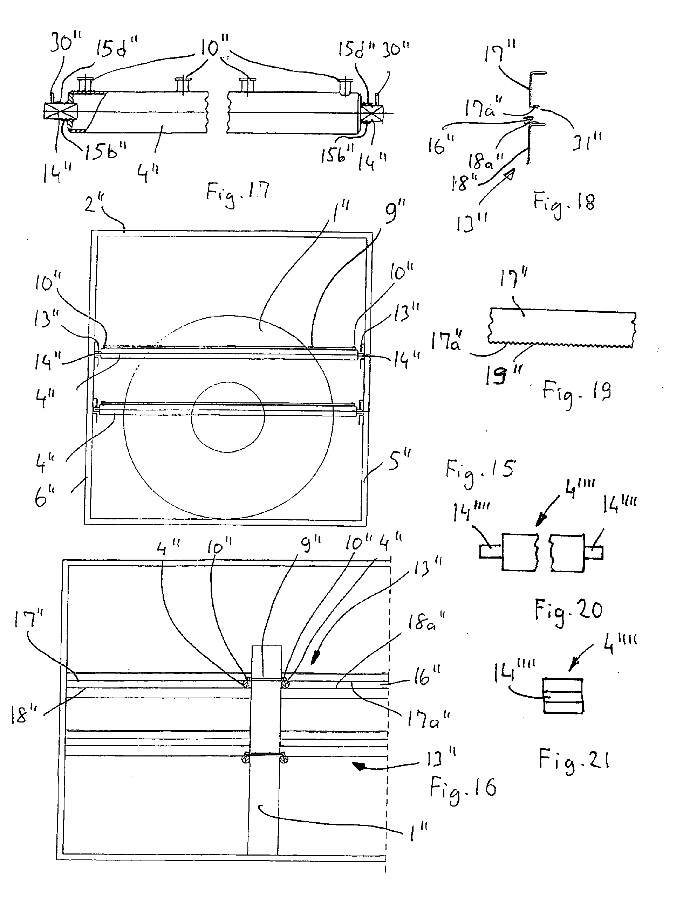

Figures 15 to 19 show a support arrangement of a load, which in Figures 15 and 16 is a reel 1, in the cargo space of a lorry or the like.

Figures 15 to 19 use the same reference numbers as Figures 31 to 14 for the corresponding components.

The arrangement of Figures 15 to 19 differs from that of Figures 1 to 14 in that the support ends 14" of the support rods 4" have locking tongues 30" that are arranged to lock into the rails 13" in such a manner that the rails 13" on the opposite walls 5" and 6" of the transport unit 2" cannot in use move away from each other so that the support ends 14" of the support rod 4" would detach from the rails 13". Thus, the support rods 4" stiffen the transportation unit. The support end 14" of the support rod 4" may be arranged inside the groove 16" of the rail 13" by turning its locking tongue 30" parallel to the groove 16" of the rail 13", after which the support end 14" of the support rod 4" may be pushed inside the groove 16". After this, the support rod 4" is turned approximately 90 degrees so that the locking tongue 30" settles behind the top wall 17" of the rail in a locked position, whereby the edge of the top wall 17" forms a locking stopper 31". Turning of the support rod 4" about 90 degrees is possible, because each support end 14" of the support rod has only two diametrically located gripping edges 15b", 15d" and the section of the support ends is generally a circle.

The profile of the rail 13" differs from the profile of rail 13 of Figure 6. The upper wall 17a of the rail comprises a dense tooth system 19" which is illustrated in Figure 19. The tooth system 19" is so dense that one may say that the adjustment and positioning of the support rod 4" on the desired place can be said to be stepless an continuous. This enables to position the support rod always directly against the load 1" to be supported and transported. Thanks to the fact that the support rod can be positioned and locked against the load so that there is no clearance between the load and the support supporting the load, no great impact forces on the support bar or on the load to be supported owing to any displacement of the load to be supported during transportation can take place.

The arrangement of Figures 15 to 19 further differs from that of Figures 1 to 14 in that it uses two pairs of support rods 4" arranged at different heights in the cargo space of the transportation unit 2" to support the reel 1. The arrangement provides for the load a more even support, and strains less the wall structure of the transportation unit 2" and its rails 13".

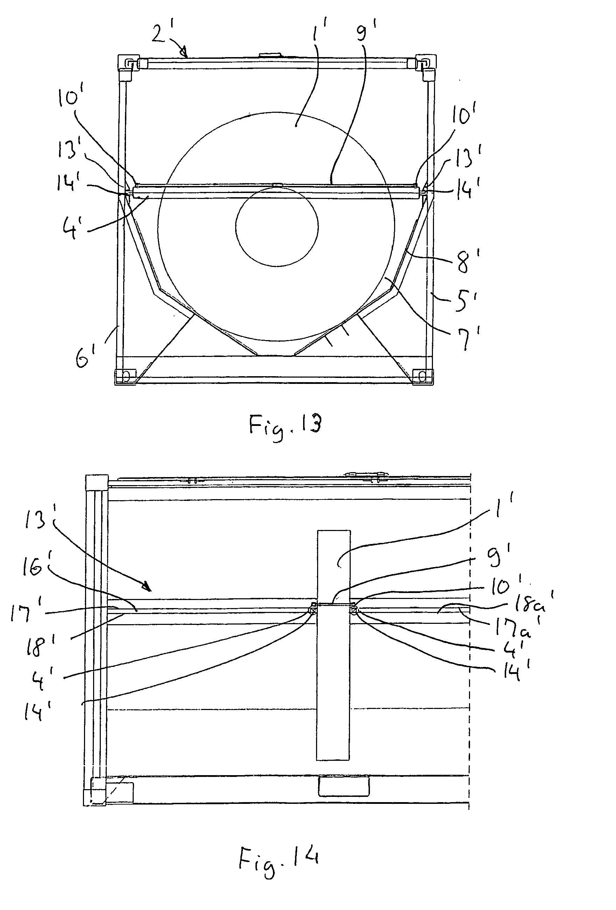

Above, the invention is described only by means of examples. Therefore, it is remarked that the invention may in many ways differ in detail within the scope of the attached claims. To use a wider expression, the support rod may be a rod-like support member, the geometry of which may differ from that of a rod. Thus, the design of the support rod and its support end may vary. The number of power transmission brackets in the support rod may vary, and the number of gripping edges in the support end may be only two, whereby these are arranged diametrically to each other. Instead of a rope, some other long flexible member may be used, such as tightening belts or chain, to tighten the support rod into its locked position. The profile of the rails may vary from what is stated herein. It is thinkable that the support rods are arranged vertically in the transportation unit instead of or in addition to the presented horizontal positioning. In Figures 20 and 21 is illustrated an embodiment of the rod-like support member 4''' having no gripping edges or power transmission brackets. The embodiment is especially well suited for being used for transport by land, such as for railway wagons, against which impact forces may hit during a possible collision. The load to be supported can be supported in the railway wagon (or other transport unit) by arranging on opposite sides of the load a support rod 4'''' (or other rod-like support member), according to Figures 20 and 21. The support rods 4'''' are connected to each other with an elongated flexible member which is tightened with tightening means (c.f. tightening means 12 in Figure 1) so that a compressive force will act on the load. If the transportation unit during transportation hits on an obstacle, the support rods will prevent the load from tilting and crashing. The load may somewhat slide (e.g. one feet) along the bottom of the transportation unit, whereby, at the same time, the support ends 14'''' of the support rod 4'''' slide along the grooves of the rails in which the support ends are located (c.f. Figure 13). In addition to collision speed, the friction against the support beneath will greatly determine the slide length. Even if the load to be supported may slide, this in not harmful or dangerous, and the load does not become damaged owing to the fact that it does not tilt. Because the support ends 14'''' enable slide of the support rod also when the load is supported, they can be called slide guides. It can be contemplated that the support rods of Figures 3, 5 an 17 may be used in such a way that their support ends function as slide guides. In such a situation one does not use the gripping edges or the power transmission brackets in order to create any torque on the support rod for locking it, but only such a support is achieved that prevents the load from tilting.

## Claims

1. A support arrangement for supporting load in a transportation unit (2, 2', 2"), such as container or vehicle for transporting load, the support arrangement comprising a rod-like support member (4, 4', 4", 4"', 4"") and a first and a second rail (13, 13', 13") parallel to the longitudinal axis of the transportation unit, which rails comprise a wall structure (17, 18, 17', 18', 17", 18") for receiving the support member (4, 4', 4", 4"', 4"") at a given support point beside the load to support it, the rod-like support member (4, 4', 4", 4"', 4"") comprising a first support end (14, 14', 14", 14"', 14"") for positioning to a first support point in the first rail and a second support end (14, 14', 14", 14"', 14"") opposite to the first support end (14, 14', 14", 14"', 14'''') for positioning to a second support point in the second rail so that the rod-like support member (4, 4', 4", 4"', 4"") is at right angles to the longitudinal axis of the transportation unit, wherein the rod-like support member (4, 4', 4", 4"', 4"") is arranged to be displaceable along the rails (13, 13', 13") guided by the rails (13, 13', 13"), **characterised in that**
- the wall structure (17, 18, 17', 18', 17", 18") of the rails (13, 13', 13") forms for said receiving of the rod-like support member (4, 4', 4", 4"', 4"") longitudinal grooves (16, 16', 16") and said support points arranged in the longitudinal direction of the rails (13, 13', 13"),
- the rod-like support member (4, 4', 4", 4"', 4"") is arranged to be displaceable along the rails (13, 13', 13") guided by longitudinal inner walls (18a, 18a', 18a") of the grooves (16, 16', 16") of the rails (13, 13', 13"), and
- the support arrangement comprises an elongated flexible member (9, 9', 9") and a tightening means (12, 12') for tightening the elongated flexible member (9, 9', 9") against the load to be supported so that displacement of the load in relation to the rod-like member (4, 4', 4", 4"', 4"") is prevented.

2. A support arrangement as claimed in claim 1, **characterised in that**
- the first support end (14, 14', 14", 14''') of the rod-like support member (4, 4', 4", 4"') is adapted to be fastened to the first support point in the first rail (13, 13', 13"), and the second support end (14, 14', 14", 14"') of the rod-like support member is adapted to be fastened to the second support point in the second rail (13, 13', 13"), for positioning the rod-like support member in a locked position in which its free movement in the longitudinal direction of the transportation unit is prevented,
- inner walls (17a, 18a, 17a', 18a', 17a", 18a") of the longitudinal grooves (16, 16', 16") of the rails (13, 13', 13") form said support points when the rod-like support member (4, 4', 4", 4''') is in its locked position,
- the first support end and the second support end (14, 14', 14", 14''') of the rod-like support member (4, 4', 4", 4''') each comprising two gripping edges (15b and 15d, 15b" and 15d", 15b''' and 15d''') arranged diametrically to each other, which are arranged to bite into the inner walls of the longitudinal grooves of the rails when the rod-like support member (4, 4', 4", 4''') is in its locked position, the inner walls forming for the support ends said support points and
- the elongated flexible support member is arranged to turn the rod-like support member (4, 4', 4", 4''') and its support ends (14, 14', 14", 14''') so that the gripping edges (15b and 15d, 15b" and 15d", 15b''' and 15d''') of the rod-like support member wedge by biting into the inner walls of the grooves (16, 16', 16") of the rails (13, 13', 13") to bring the rod-like support member into its locked position the rod-like support member (4, 4', 4", 4''') comprising power transmission brackets (10a, 10b, 10c, 10d, 10e, 10', 10") in cooperation with the elongated flexible member (9, 9', 9"), which are arranged to transmit a torque to the rod-like support member (4, 4', 4", 4''') for turning it, when the elongated flexible member (9, 9', 9"), is tightened with tightening means (12, 12') connected thereto and arranged to uphold a torque exerted on the rod-like support member (4, 4', 4", 4''') and keep the rod-like support member (4, 4', 4", 4''') in its locked position so that its free movement relative to the transportation unit is prevented.

3. A support arrangement as claimed in claim 1, **characterised in that** the support end (14, 14', 14", 14''') of the rod-like support member (4, 4', 4", 4''') comprises a first diameter (d1) that is smaller than the width (W) of the grooves (16, 16', 16") of the rails (13, 13', 13"), and a second diameter (d3) that is larger than the width (W) of the rail grooves.

4. A support arrangement as claimed in claim 2, **characterised in that** the power transmission brackets (10a, 10b, 10c, 10d, 10e, 10', 10") are arranged close to the support ends (14, 14', 14", 14''') of the rod-like support member (4, 4', 4", 4''').

5. A support arrangement as claimed in claim 2, **characterised in that** the rod-like support member (4, 4', 4", 4''') comprises several power transmission brackets (10a, 10b, 10c, 10d, 10e, 10', 10") arranged in its longitudinal direction at a distance from each other.

6. A support arrangement as claimed in claim 1, **characterised in that** the support end (14") of the rod-like support member (4") has a locking tongue (30") and that the rail (13") comprises a locking stopper (31 ") to receive the locking tongue in such a manner that a movement of the rail relative to the longitudinal direction of the rod-like support member is substantially prevented.

7. A support arrangement as claimed in claim 1, **characterised in that** the cross-section of the rod-like support member (4, 4', 4") is a circle.

8. A support arrangement as claimed in claim 1, **characterised in that** the surface of the inner walls (17a, 18a, 17a', 18a', 17a", 18a") of the longitudinal grooves (16, 16', 16") of the first rail (13, 13', 13") and the second rail (13, 13', 13") deviate from smooth inner walls.

9. A support arrangement as claimed in claim 8, **characterised in that** the inner walls (17a, 18a, 17a', 18a', 17a", 17b") of the longitudinal grooves (16, 16', 16") of the first rail (13, 13', 13") and the second rail (13, 13', 13") comprise locking teeth (19, 19") for receiving a gripping edge (15d, 15d", 15d''') in the support end (14, 14' 14", 14''') of the rod-like support member (4, 4', 4", 4''') and for locking the gripping edge at the given support point of the rail.

10. A support arrangement as claimed in claim 9, **characterised in that** the distance (S3) between the locking teeth (19, 19") is smaller than the diameter (D) of the rod-like support member (4, 4', 4").

11. A support arrangement as claimed in claim 2, **characterised in that** the inner waits of the grooves of the first rail and the second rail are smooth for placing when the rod-like support member is in a shift position the rod-like support member steplessly along said grooves against the load to be supported, whereby the diametrically positioned gripping edges of the rod-like support member are arranged to bite into the smooth inner walls of the longitudinal grooves when the rod-like support member is in its locked position.

12. A support arrangement as claimed in claim 1, **characterised in that** it comprises two rod-like support members (4', 4", 4"') that are arranged on opposite sides of the load and close to the load to support the load, the elongated flexible member (9', 9") being arranged around the power transmission brackets (10', 10") of the rod-like support members to turn the rod-like support members (4', 4", 4''') and lock their gripping edges (15b and 15d, 15b" and 15d", 15b''' and 15d''') into the inner walls (17a', 18a', 17a", 18a") of the grooves (16', 16") in the rails (13', 13"), when the elongated flexible member (9', 9") is tightened.

13. A support arrangement as claimed claim 2, **characterised in that** the gripping edges (15b and 15d, 15b' and 15d',15b''' and 15d''') of the rod-like support member (4, 4', 4", 4"') are made of a material that is strong and hard and stronger and harder than the material of the rails (13, 13', 13").

14. A support arrangement as claimed in claim 1, **characterised in that** the transportation unit (2, 2') comprises a chute (7, 7') for receiving a reel (1) in such a manner that a mantle surface of the reel (1) is supported by the inner walls (8a, 8a') of the chute and the rod-like support member (4, 4', 4", 4''') is arranged above a centre axis of the reel.

## Patentansprüche

1. Eine Stützanordnung zum Stützen der Last in einer Transporteinheit (2, 2', 2"), wie einem Container oder einem Fahrzeug zum Transportieren von Last, wobei die Stützanordnung einen stangenartigen Stützteil (4, 4', 4", 4"', 4"") und eine erste und eine zweite, zu der Längsachse der Transporteinheit parallele Schiene (13, 13', 13") aufweist, welche Schienen eine Wandstruktur (17, 18, 17', 18', 17", 18") zum Aufnehmen des Stützteils (4, 4', 4", 4"', 4"") an einem beliebigen Stützpunkt neben der Last zu ihrem Stützen aufweisen, wobei der stangenartige Stützteil (4, 4', 4", 4"', 4"") ein erstes Stützende (14, 14', 14", 14"', 14"") zur Positionierung an einen ersten Stützpunkt in der ersten Schiene und ein zweites Stützende (14, 14', 14", 14"', 14"") gegenüber dem ersten Stützende (14, 14', 14", 14"', 14"") zur Positionierung an einen zweiten Stützpunkt in der zweiten Schiene derart, dass sich der stangenartige Stützteil (4, 4', 4", 4"', 4"") im rechten Winkel zu der Längsachse der Transporteinheit befindet, wobei der stangenartige Stützteil (4, 4', 4", 4"', 4"") angeordnet ist, den Schienen (13, 13', 13") entlang durch die Schienen (13, 13', 13") gesteuert verschiebbar zu sein, **dadurch gekennzeichnet, dass** die Wandstruktur (17, 18, 17', 18', 17", 18") der Schienen (13, 13', 13") für das besagte Aufnehmen des stangenartigen Stützteils (4, 4', 4", 4"', 4"") längsgerichtete Rillen (16, 16', 16") bildet und die besagten Stützpunkte in der Längsrichtung der Schienen (13, 13', 13") angeordnet sind,
der stangenartige Stützteil (4, 4', 4", 4"', 4"") angeordnet ist, den Schienen (13, 13', 13") entlang verschoben zu werden, gesteuert durch längsgerichtete innere Wände (18a, 18a', 18a") der Rillen (16, 16', 16") der Schienen (13, 13', 13"), und
die Stützanordnung einen länglichen flexiblen Teil (9, 9', 9") und ein Spannmittel (12, 12') aufweist zum Anspannen des länglichen flexiblen Teils (9, 9', 9") gegen die zu stützende Last derart, dass eine Verschiebung der Last in Bezug auf den stangenartigen Stützteil (4, 4', 4", 4"', 4"") verhindert wird.

2. Eine Stützanordnung gemäß dem Patentanspruch 1, **dadurch gekennzeichnet, dass**
das erste Stützende (14, 14', 14", 14"') des stangenartigen Stützteils (4, 4', 4", 4"') angeordnet ist, an dem ersten Stützpunkt in der ersten Schiene (13, 13', 13") befestigt zu werden, und das zweite Stützende (14, 14', 14", 14"') des stangenartigen Stützteils angeordnet ist, an dem zweiten Stützpunkt in der zweiten Schiene (13, 13', 13") befestigt zu werden, zur Positionierung des stangenartigen Stützteils in eine arretierte Position, in der seine freie Bewegung in der Längsrichtung der Transporteinheit verhindert wird,
innere Wände (17a, 18a, 17a', 18a', 17a", 18a") der längsgerichteten Rillen (16, 16', 16") der Schienen (13, 13', 13") besagte Stützpunkte bilden, wenn sich der stangenartige Stützteil (4, 4', 4", 4"') in seiner arretierten Position befindet,
das erste Stützende und das zweite Stützende (14, 14', 14", 14"') des stangenartigen Stützteils (4, 4', 4", 4"'), die beide zwei Greifkanten (15b und 15d, 15b" und 15d", 15b'" und 15d"') aufweisen, die diametral zu einander angeordnet sind, die angeordnet sind, sich in die inneren Wände der längsgerichteten Rillen der Schienen reinzubeißen, wenn sich der stangenartige Stützteil (4, 4', 4", 4"') in seiner arretierten Position befindet, wobei die inneren Wände für die Stützenden besagte Stützpunkte bilden, und
der längliche flexible Stützteil angeordnet ist, den stangenartigen Stützteil (4, 4', 4", 4"') und seine Stützenden (14, 14', 14", 14"') derart zu drehen, dass die Greifkanten (15b und 15d, 15b" und 15d", 15b"' und 15d"') des stangenartigen Stützteils sich einkeilen, indem sie sich in die inneren Wände der Rillen (16, 16', 16") der Schienen (13, 13', 13") reinbeißen, um den stangenartigen Stützteil in seine arretierte Position zu bringen, wobei der stangenartige Stützteil (4, 4', 4", 4"') Kraftübertragungsvorsprünge (10a, 10b, 10c, 10d, 10e, 10', 10") in Kooperation mit dem länglichen flexiblen Teil (9, 9', 9") aufweist, welche angeordnet ist, ein Drehmoment an den stangenartigen Stützteil (4, 4', 4", 4"') zu übermitteln, um ihn zu drehen, wenn der längliche flexible Teil (9, 9', 9") mit dem damit verbundenen Spannmittel (12, 12') angespannt wird und angeordnet ist, ein auf den stangenartigen Stützteil (4, 4', 4", 4"') ausgeübtes Drehmoment aufrecht zu erhalten und den stangenartigen Stützteil (4, 4', 4", 4"') in seiner arretierten Position zu halten, derart, dass seine freie Bewegung in Bezug auf die Transporteinheit verhindert wird.

3. Eine Stützanordnung gemäß dem Patentanspruch 1, **dadurch gekennzeichnet, dass** das Stützende (14, 14', 14", 14"') des stangenartigen Stützteils (4, 4', 4", 4"') einen ersten Diameter (d1), der kleiner als die Weite (W) der Rillen (16, 16', 16") der Schienen (13, 13', 13") ist, und einen zweiten Diameter (d3), der größer als die Weite (W) der Schienenrillen ist, aufweist.

4. Eine Stützanordnung gemäß dem Patentanspruch 2, **dadurch gekennzeichnet, dass** die Kraftübertragungsvorsprünge (10a, 10b, 10c, 10d, 10e, 10', 10") nahe an den Stützenden (14, 14', 14", 14"') des stangenartigen Stützteils (4, 4', 4", 4"') angeordnet sind.

5. Eine Stützanordnung gemäß dem Patentanspruch 2, **dadurch gekennzeichnet, dass** der stangenartige Stützteil (4, 4', 4", 4"') mehrere Kraftübertragungsvorsprünge (10a, 10b, 10c, 10d, 10e, 10', 10") aufweist, die in seiner Längsrichtung in Abständen voneinander angeordnet sind.

6. Eine Stützanordnung gemäß dem Patentanspruch 1, **dadurch gekennzeichnet, dass** das Stützende (14") des stangenartigen Stützteils (4") eine Verriegelungszunge (30") aufweist und dass die Schiene (13") einen Verriegelungsstopper (31 ") aufweist, um die Verriegelungszunge derart aufzunehmen, dass eine Bewegung der Schiene in Bezug auf die Längsrichtung des stangenartigen Stützteils im Wesentlichen verhindert wird.

7. Eine Stützanordnung gemäß dem Patentanspruch 1, **dadurch gekennzeichnet, dass** der Querschnitt des stangenartigen Stützteils (4, 4', 4") ein Kreis ist.

8. Eine Stützanordnung gemäß dem Patentanspruch 1, **dadurch gekennzeichnet, dass** die Oberfläche der inneren Wände (17a, 18a, 17a', 18a', 17a", 18a") der längsgerichteten Rillen (16, 16', 16") der ersten Schiene (13, 13', 13") und der zweiten Schiene (13, 13', 13") von glatten inneren Wänden abweichen.

9. Eine Stützanordnung gemäß dem Patentanspruch 8, **dadurch gekennzeichnet, dass** die Oberfläche der inneren Wände (17a, 18a, 17a', 18a', 17a", 18a") der längsgerichteten Rillen (16, 16', 16") der ersten Schiene (13, 13', 13") und der zweiten Schiene (13, 13', 13") Verriegelungszähne (19, 19") aufweist, um eine Greifkante (15d, 15d", 15d"') in dem Stützende (14, 14', 14", 14"') des stangenartigen Stützteils (4, 4', 4", 4"') aufzunehmen und die Greifkante an einem beliebigen Stützpunkt der Schiene zu arretieren.

10. Eine Stützanordnung gemäß dem Patentanspruch 9, **dadurch gekennzeichnet, dass** die Entfernung (S3) zwischen den Verriegelungszähnen (19, 19") kleiner als der Diameter (D) des stangenartigen Stützteils (4, 4', 4") ist.

11. Eine Stützanordnung gemäß dem Patentanspruch 2, **dadurch gekennzeichnet, dass** die inneren Wände der Rillen der ersten Schiene und der zweiten Schiene glatt sind, um den stangenartigen Stützteil, wenn der stangenartige Stützteil in einer Verschiebungsposition ist, stufenlos den besagten Rillen entlang gegen die zu stützende Last zu platzieren, wobei die diametral positionierten Greifkanten des stangenartigen Stützteils angeordnet sind, in die glatten inneren Wände der längsgerichteten Rillen reinzubeißen, wenn sich der stangenartige Stützteil in seiner arretierten Position befindet.

12. Eine Stützanordnung gemäß dem Patentanspruch 1, **dadurch gekennzeichnet, dass** sie zwei stangenartige Stützteile (4', 4", 4"') aufweist, die auf den entgegengesetzten Seiten der Last und nahe an der Last angeordnet sind, um die Last zu stützen, wobei der längliche flexible Teil (9', 9") um die Kraftübertragungsvorsprünge (10', 10") des stangenartigen Stützteils herum angeordnet sind, um die stangenartigen Stützteile (4', 4", 4"') zu drehen und ihre Greifkanten (15b und 15d, 15b" und 15d", 15b"' und 15d"') in die inneren Wände (17a', 18a', 17a", 18a") der Rillen (16', 16") in den Schienen (13', 13") zu arretieren, wenn der längliche flexible Teil (9', 9") angespannt wird.

13. Eine Stützanordnung gemäß dem Patentanspruch 2, **dadurch gekennzeichnet, dass** die Greifkanten (15b und 15d, 15b' und 15d', 15b"' und 15d"') des stangenartigen Stützteils (4, 4', 4", 4"') aus einem Material hergestellt sind, das stark und hart und stärker und härter als das Material der Schienen (13, 13', 13") ist.

14. Eine Stützanordnung gemäß dem Patentanspruch 1, **dadurch gekennzeichnet, dass** die Transporteinheit (2, 2') eine Rinne (7, 7') aufweist, um eine Spule (1) derart aufzunehmen, dass eine Manteloberfläche der Spule (1) durch die inneren Wände (8a, 8a') der Rinne abgestützt wird und der stangenartige Stützteil (4, 4', 4", 4"') oberhalb der zentralen Achse der Spule angeordnet ist.

## Revendications

1. Agencement de support pour supporter une charge dans une unité de transport (2, 2', 2"), telle qu'un conteneur ou un véhicule pour transporter la charge, l'agencement de support comprenant un élément de support en forme de tige (4, 4', 4", 4"', 4"") et un premier et un second rail (13, 13', 13") parallèles à l'axe longitudinal de l'unité de transport, lesquels rails comprennent une structure de paroi (17, 18, 17', 18', 17", 18") pour recevoir l'élément de support (4, 4', 4'', 4''', 4"") à un point de support donné à côté de la charge pour la supporter, l'élément de support en forme de tige (4, 4', 4", 4"', 4"") comprenant une première extrémité de support (14, 14', 14", 14"', 14"") pour le positionnement sur un premier point de support dans le premier rail et une seconde extrémité de support (14, 14', 14", 14"', 14"") opposée à la première extrémité de support (14, 14', 14", 14"', 14"") pour le positionnement sur un second point de support dans le second rail de sorte que l'élément de support en forme de tige (4, 4', 4", 4"', 4"") est en angle droit par rapport à l'axe longitudinal de l'unité de transport, dans lequel l'élément de support en forme de tige (4, 4', 4", 4"', 4"") est agencé pour être déplaçable le long des rails (13, 13', 13") guidé par les rails (13, 13', 13"),
**caractérisé en ce que**
- la structure de paroi (17, 18, 17', 18', 17", 18") des rails (13, 13', 13") forme pour ladite réception de l'élément de support en forme de tige (4, 4', 4", 4"', 4""), des rainures longitudinales (16, 16', 16") et lesdits points de support agencés dans la direction longitudinale des rails (13, 13', 13"),
- l'élément de support en forme de tige (4, 4', 4", 4"', 4"") est agencé pour être déplaçable le long des rails (13, 13', 13") guidé par des parois internes longitudinales (18a, 18a', 18a") des rainures (16, 16', 16") des rails (13, 13', 13"), et
- l'agencement de support comprend un élément flexible allongé (9, 9', 9") et des moyens de serrage (12, 12') pour serrer l'élément flexible allongé (9, 9', 9") contre la charge à supporter de sorte que le déplacement de la charge par rapport à l'élément en forme de tige (4, 4', 4", 4"', 4"") est empêché.

2. Agencement de support selon la revendication 1, **caractérisé en ce que**
- la première extrémité de support (14, 14', 14", 14"') de l'élément de support en forme de tige (4, 4', 4", 4"') est adaptée pour être fixée sur le premier point de support dans le premier rail (13, 13', 13"), et la seconde extrémité de support (14, 14', 14", 14"') de l'élément de support en forme de tige est adaptée pour être fixée sur le second point de support dans le second rail (13, 13', 13"), pour positionner l'élément de support en forme de tige dans une position verrouillée dans laquelle son mouvement libre dans la direction longitudinale de l'unité de transport est empêché,
- des parois internes (17a, 18a, 17a', 18a', 17a", 18a") des rainures longitudinales (16, 16', 16") des rails (13, 13', 13") forment lesdits points de support lorsque l'élément de support en forme de tige (4, 4', 4", 4"') est dans sa position verrouillée,
- la première extrémité de support et la seconde extrémité de support (14, 14', 14", 14"') de l'élément de support en forme de tige (4, 4', 4", 4"') comprenant chacune deux bords de préhension (15b et 15d, 15b" et 15d", 15b"' et 15d"') agencés de manière diamétrale entre eux, qui sont agencés pour mordre dans les parois internes des rainures longitudinales des rails lorsque l'élément de support en forme de tige (4, 4', 4", 4"') est dans sa position bloquée, les parois internes formant pour les extrémités de support lesdits points de support, et
- l'élément de support flexible allongé est agencé pour faire tourner l'élément de support en forme de tige (4, 4', 4", 4"') et ses extrémités de support (14, 14', 14", 14"') de sorte que les bords de préhension (15b et 15d, 15b" et 15d", 15b"' et 15d"') de l'élément de support en forme de tige se calent en mordant dans les parois internes des rainures (16, 16', 16'') des rails (13, 13', 13") pour amener l'élément de support en forme de tige dans sa position verrouillée, l'élément de support en forme de tige (4, 4', 4", 4"') comprenant des consoles de transmission de puissance (10a, 10b, 10c, 10d, 10e, 10', 10") en coopération avec l'élément flexible allongé (9, 9', 9") qui sont agencées pour transmettre un couple à l'élément de support de tige (4, 4', 4", 4"') pour le faire tourner, lorsque l'élément flexible allongé (9, 9', 9") est serré avec des moyens de serrage (12, 12') raccordés à ce dernier et agencés pour maintenir un couple exercé sur l'élément de support en forme de tige (4, 4', 4", 4"') et maintenir l'élément de support en forme de tige (4, 4', 4", 4"') dans sa position verrouillée de sorte que son mouvement libre par rapport à l'unité de transport est empêché.

3. Agencement de support selon la revendication 1, **caractérisé en ce que** l'extrémité de support (14, 14', 14", 14"') de l'élément de support en forme de tige (4, 4', 4", 4"') comprend un premier diamètre (d1) qui est inférieur à la largeur (W) des rainures (16, 16', 16") des rails (13, 13', 13") et un second diamètre (d3) qui est supérieur à la largeur (W) des rainures de rail.

4. Agencement de support selon la revendication 2, **caractérisé en ce que** les consoles de transmission de puissance (10a, 10b, 10c, 10d, 10e, 10', 10") sont agencées à proximité des extrémités de support (14, 14', 14", 14"') de l'élément de support en forme de tige (4, 4', 4", 4"').

5. Agencement de support selon la revendication 2, **caractérisé en ce que** l'élément de support en forme de tige (4, 4', 4", 4"') comprend plusieurs consoles de transmission de puissance (10a, 10b, 10c, 10d, 10e, 10', 10") agencées dans sa direction longitudinale à une certaine distance les unes des autres.

6. Agencement de support selon la revendication 1, **caractérisé en ce que** l'extrémité de support (14") de l'élément de support en forme de tige (4") a une languette de verrouillage (30") et **en ce que** le rail (13") comprend une butée de verrouillage (31") pour recevoir la languette de verrouillage de sorte qu'un mouvement du rail par rapport à la direction longitudinale de l'élément de support en forme de tige est sensiblement empêché.

7. Agencement de support selon la revendication 1, **caractérisé en ce que** la section transversale de l'élément de support en forme de tige (4, 4', 4") est un cercle.

8. Agencement de support selon la revendication 1, **caractérisé en ce que** la surface des parois internes (17a, 18a, 17a', 18a', 17a", 18a") des rainures longitudinales (16, 16', 16") du premier rail (13, 13', 13") et du second rail (13, 13', 13") dévie des parois internes lisses.

9. Agencement de support selon la revendication 8, **caractérisé en ce que** les parois internes (17a, 18a, 17a', 18a', 17a", 17b") des rainures longitudinales (16, 16', 16'') du premier rail (13, 13", 13") et du second rail (13, 13', 13") comprennent des dents de verrouillage (19, 19") pour recevoir un bord de préhension (15d, 15d", 15d"') dans l'extrémité de support (14, 14', 14", 14"') de l'élément de support en forme de tige (4, 4', 4", 4"') et pour verrouiller le bord de préhension au point de support donné du rail.

10. Agencement de support selon la revendication 9, **caractérisé en ce que** la distance (S3) entre les dents de verrouillage (19, 19") est inférieure au diamètre (D) de l'élément de support en forme de tige (4, 4', 4").

11. Agencement de support selon la revendication 2, **caractérisé en ce que** les parois internes des rainures du premier rail et du second rail sont lisses pour placer, lorsque l'élément de support en forme de tige est dans une position de déplacement, l'élément de support en forme de tige sans à-coup le long desdites rainures contre la charge à supporter, moyennant quoi les bords de préhension positionnés de manière diamétrale de l'élément de support en forme de tige sont agencés pour mordre dans les parois internes lisses des rainures longitudinales lorsque l'élément de support en forme de tige est dans sa position verrouillée.

12. Agencement de support selon la revendication 1, **caractérisé en ce qu'**il comprend deux éléments de support en forme de tige (4', 4", 4"') qui sont agencés sur des côtés opposés de la charge et à proximité de la charge pour supporter la charge, l'élément flexible allongé (9', 9") étant agencé autour des consoles de transmission de puissance (10', 10") des éléments de support en forme de tige pour faire tourner les éléments de support en forme de tige (4', 4", 4"') et verrouiller leurs bords de préhension (15b et 15d, 15b" et 15d", 15b'" et 15d"') dans les parois internes (17a', 18a', 17a", 18a") des rainures (16', 16") dans les rails (13', 13") lorsque l'élément flexible allongé (9', 9") est serré.

13. Agencement de support selon la revendication 2, **caractérisé en ce que** les bords de préhension (15b et 15d, 15b' et 15d', 15b"' et 15d"') de l'élément de support en forme de tige (4, 4', 4", 4"') sont réalisés avec un matériau qui est résistant et dur, plus résistant et plus dur que les matériaux des rails (13, 13', 13").

14. Agencement de support selon la revendication 1, **caractérisé en ce que** l'unité de transport (2, 2') comprend une goulotte (7, 7') pour recevoir une bobine (1) de sorte qu'une surface de chemise de la bobine (1) est supportée par les parois internes (8a, 8a') de la goulotte et l'élément de support en forme de tige (4, 4', 4", 4"') est agencé au-dessus d'un axe central de la bobine.
